# EUROPEAN PATENT SPECIFICATION

(11) **EP 2 421 065 B1**
(45) Date of publication and mention of the grant of the patent: **06.11.2013**
(21) Application number: 11162791.5
(22) Date of filing: 18.04.2011
(51) Int. Cl.: H01M 2/06, H01M 10/04, H01M 2/02, H01M 6/42, H01M 2/30, H01M 2/20, H01M 2/04

(54) **Rechargeable battery**
Wiederaufladbare Batterie
Batterie rechargeable

(30) Priority: 16.08.2010 US 374059 P; 10.12.2010 US 965739
(43) Date of publication of application: 22.02.2012
(73) Proprietor: Samsung SDI Co., Ltd., Gyeonggi-do (KR); Robert Bosch GmbH, 70442 Stuttgart (DE)
(72) Inventor: Kim, Sung-Bae, Yongin-si Gyeonggi-do (KR)
(74) Representative: Gulde Hengelhaupt Ziebig & Schneider

(56) References cited:
- JP-A- 11 195 434
- JP-A- 2001 357 834
- JP-A- 2008 097 903
- JP-A- 2009 259 424
- JP-A- 2010 055 786
- US-A1- 2010 143 786

## Description

### FIELD OF THE INVENTION

The present invention relates to a rechargeable battery.

### DESCRIPTION OF THE RELATED ART

A rechargeable battery can be recharged and discharged, unlike a primary battery, and can repeat a charging process that changes external electric energy to a chemical energy form and stores the chemical energy and a discharging process that changes the chemical energy to an electric energy form for use of the electric energy.

Representative examples of such a rechargeable battery include a nickel hydrogen battery, a nickel cadmium battery, a lithium ion battery, and a lithium polymer battery.

In general, a rechargeable battery includes an electrode assembly including a positive electrode, a negative electrode, and a separator, a case that houses the electrode assembly, and an electrode terminal that is electrically connected to the electrode assembly to function as an electrical passage to the outside. By forming a large capacity of battery module through connecting a plurality of rechargeable batteries, the battery module can be used by appliances requiring a large amount of electric power, such as an electric vehicle and a hybrid vehicle. In this way, when using a rechargeable battery in an electric vehicle or a hybrid vehicle, it is usual to form an electrode terminal using aluminum, copper, etc., in consideration of electrical conductivity and an electrochemical corrosion problem, and the size of the electrode terminal is limited to a predetermined size.

In order to form rechargeable batteries in a battery module, electrode terminals of adjacent rechargeable batteries are connected using a bus bar, and when electrode terminals are formed with aluminum and copper, in a process of fastening the bus bar and the electrode terminals, the bus bar and the electrode terminals cannot be fastened with a large torque due to low strength of the electrode terminals.

Thereby, in an environment having much vibration and impact, such as an electric vehicle or a hybrid vehicle, when a rechargeable batteries are formed in a battery module and used, the connection between the bus bar and the electrode terminals that are fastened with a low torque is released and thus there is a problem in structural stability of the battery module.
Document JP 2010 055786 discloses a rechargeable battery comprising the features of the preamble of present claim 1.
Document JP 2001 357834 discloses a terminal arrangement consisting of two terminal fastening members connected to each other, wherein one of them has walls around the flat portion of the other one.

### SUMMARY OF THE INVENTION

The present invention has been made in an effort to provide a rechargeable battery having advantages of improving an electrode terminal structure in order to allow an increase of a fastening force of a bus bar when forming a battery module.

An exemplary embodiment of the present invention provides a rechargeable battery comprising an electrode assembly, a case for housing the electrode assembly therein, a cap plate covering an opening of the case, an electrode terminal connected to the electrode assembly comprising a first terminal plate located on the cap plate and electrically coupled to the electrode assembly, and a second terminal plate electrically coupled to the first terminal plate and having a through-hole formed therein. A terminal fastening member is provided comprising an insertion portion fitted between the first and second terminal plates and a fastening portion protruding through the through-hole in the second terminal plate.

Preferably, the terminal fastening member is formed of a material being different from and having greater strength than the materials of the first and second terminal plates.

Thus, the terminal fastening member is formed to resist larger forces than the first and second terminal plates.

The terminal fastening member is preferably formed of a material having a lower electrical conductivity than the materials of the first and second terminal plates. Thus, the electrical conduction takes preferably at least mainly place through the first and second terminal plates.

In one embodiment, the first and second terminal plates are formed of the same material, preferably of aluminum or copper, and the terminal fastening member is formed of stainless steel.

The first and second terminal plates are preferably separate plates being welded to each other.

The terminal fastening member is preferably framed or bound by the first and second terminal plates at least in a vertical direction.

The first terminal plate comprises a base plate and at least two side walls extending from the base plate. The lower surface of the insertion portion preferably directly contacts an upper surface of the base plate and is preferably supported thereon and the upper surface of the insertion portion preferably directly contacts a lower surface of the second terminal plate. The insertion portion may have the same width as a distance between the at least two side walls of the first terminal plate and/or the same height as the vertical space formed between the first and second terminal plates.

First groove portions may be formed on the base plate and first protrusions may be formed on the terminal fastening member adapted to fit into the first groove portions. A second groove portion may be formed on a side wall of the first terminal plate adapted to receive an edge of the second terminal plate. An edge of the second terminal plate is preferably welded to the first terminal plate at a location corresponding to the second groove portion.

A connection plate may be provided between the first terminal plate and the cap plate, the connection plate electrically coupling the cap plate to the first terminal plate.

The first terminal plate and the connection plate may each comprise through-holes for inserting a terminal connection member therein, the terminal connection member extending from an inside of the case.

It is further provided a battery module comprising a plurality of rechargeable batteries according to the invention and a bus bar, which electrically couples an electrode terminal of a first rechargeable battery with an electrode terminal of a second rechargeable battery, and is arranged between a second terminal plate of a respective terminal and a bus bar fastening member, wherein the bus bar fastening member is fixed to the terminal fastening member of the respective terminal.

According to the present invention, during assembly of battery modules, a fastening force between the bus bar and the electrode terminal can be increased and thus a failure due to external vibration and impact can be suppressed.

Advantageously, the provision of the first and second terminal plates as plates increases a contact area between the bus bar and the electrode terminal and thus reduces a contact resistance.

### BRIEF DESCRIPTION OF THE DRAWINGS

FIG. 1 is a perspective view illustrating a rechargeable battery according to a first exemplary embodiment of the present invention.
FIG. 2 is a cross-sectional view of the rechargeable battery taken along line II-II of FIG. 1.
FIG. 3 is a partial exploded perspective view illustrating an electrode terminal of a rechargeable battery according to a first exemplary embodiment of the present invention.
FIG. 4 is a cross-sectional view illustrating an electrode terminal of the rechargeable battery taken along line IV-IV of FIG. 1.
FIG. 5 is a cross-sectional view illustrating an electrode terminal of the rechargeable battery taken along line V-V of FIG. 1.
FIG. 6 is a partial enlarged view illustrating a fastening state between an electrode terminal and a bus bar of a rechargeable battery according to a first exemplary embodiment of the present invention.
FIG. 7 is a partial enlarged view illustrating a fastening state between an electrode terminal and a bus bar of a rechargeable battery according to an exemplary variation of the present invention.
FIG. 8 is a partial exploded perspective view illustrating an electrode terminal of a rechargeable battery according to a second exemplary embodiment of the present invention.
FIG. 9 is a cross-sectional view illustrating a rechargeable battery according to a third exemplary embodiment of the present invention.

### DETAILED DESCRIPTION OF THE EMBODIMENTS

In the following detailed description, only certain exemplary embodiments of the present invention are shown and described, simply by way of illustration. Accordingly, the drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element.

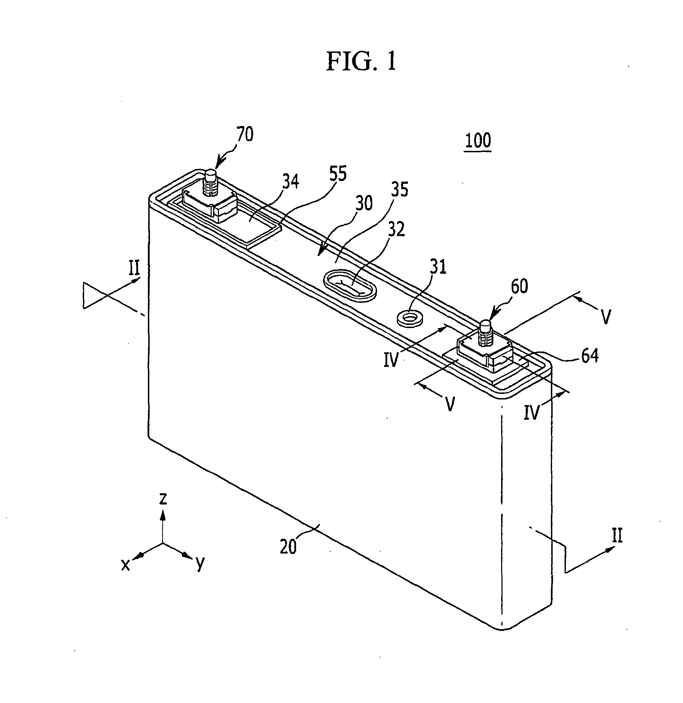

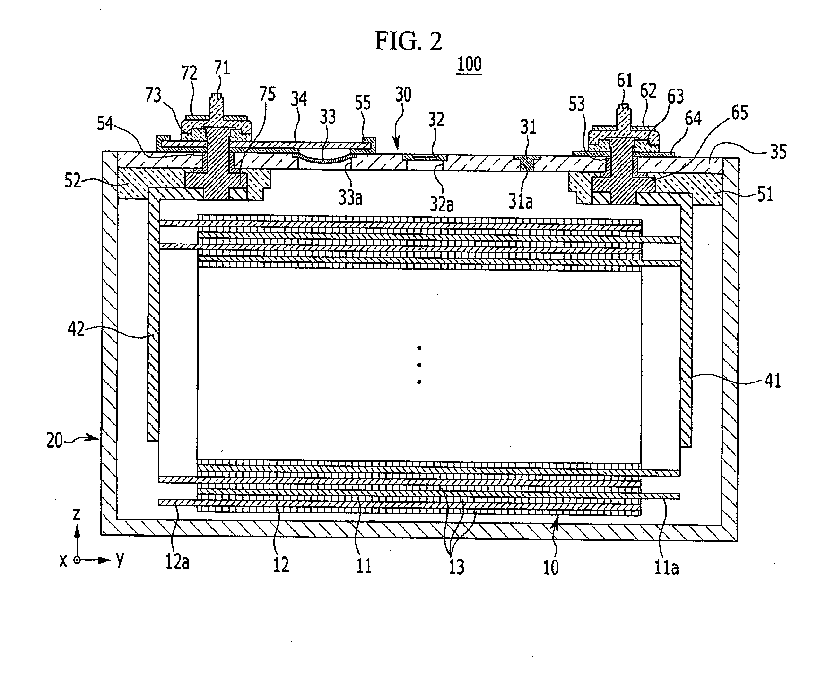

FIG. 1 is a perspective view illustrating a rechargeable battery according to a first exemplary embodiment of the present invention, and FIG. 2 is a cross-sectional view of the rechargeable battery taken along line II-II of FIG. 1.

Referring to FIGS. 1 and 2, a rechargeable battery 100 according to the present exemplary embodiment includes an electrode assembly 10, a case 20 that houses the electrode assembly 10, and a cap assembly 30 that covers an opening of the case 20.

The electrode assembly 10 includes a positive electrode 11, a negative electrode 12, and a separator 13, which is an insulator that is interposed between the positive electrode 11 and the negative electrode 12, and is formed in a jelly-roll shape by winding them. However, the electrode assembly 10 is not limited thereto and may be formed in a stack structure in which multiple positive electrodes, separators, and negative electrodes that are formed as sheets are stacked.

The positive electrode 11 and the negative electrode 12 include coating portions, which are areas where an active material is coated on thin plates that function as current collectors, and uncoated portions 11a and 12a, which are areas where an active material is not coated. The uncoated portion 11 a of the positive electrode 11 is formed at one side end of the positive electrode 11 along a length direction (y-axis direction) of the positive electrode 11, and the uncoated portion 12a of the negative electrode 12 is formed at the other side end of the negative electrode 12 along a length direction (y-axis direction) of the negative electrode 12.

The case 20 is formed in an approximately rectangular parallelepiped shape having an empty center in order to form a space that houses the electrode assembly 10 therein, and an opening that communicates with the internal space thereof is formed at one side of the case 20.

The cap assembly 30 includes a cap plate 35 that is formed as a thin plate to cover an opening that is formed at one side of the case 20. Further, the cap assembly 30 includes a seal stopper 31 and a vent plate 32, and the seal stopper 31 and the vent plate 32 are formed in the cap plate 35 and are installed in an electrolyte solution injection port 31a for injecting an electrolyte solution to the internal space of the case 20 and a vent hole 32a, respectively, for discharging gas generating within the case 20. In this case, a notch to be opened when the internal pressure of the rechargeable battery 100 arrives in a predetermined pressure is formed in the vent plate 32. The cap assembly 30 according to the present exemplary embodiment includes a deformable member 33 and a short circuit tab 34 for preventing explosion and ignition due to the increase of internal pressure of the rechargeable battery 100, and this will be described again later.

Electrode terminals 60 and 70 are installed to penetrate the cap plate 35, and are electrically connected to the electrode assembly 10 to form an electrical passage between the electrode assembly 10 and external constituent elements. In the present exemplary embodiment, the positive terminal 60 includes a first terminal plate 63, a second terminal plate 62, a positive terminal connection member 65, and a positive terminal fastening member 61, and the negative terminal 70 includes a first terminal plate 73, a second terminal plate 72, a negative terminal connection member 75, and a negative terminal fastening member 71.

Throughout the following, for ease of understanding, a first terminal plate 63, 73 is called a lower terminal plate 63, 73 and a second terminal plate 62, 72 is called an upper terminal plate 62, 72 referring to their vertical arrangement on top of each other.

The positive uncoated portion 11 a and the negative uncoated portion 12a of the electrode assembly 10 are connected to a positive lead tab 41 and a negative lead tab 42, respectively, and the positive lead tab 41 and the negative lead tab 42 are connected to the positive terminal 60 and the negative terminal 70, respectively. The positive terminal connection member 65 and the negative terminal connection member 75 are each installed to penetrate the cap plate 35 to connect the positive lead tab 41 and the lower terminal plate 63 of the positive terminal 60 and connect the negative lead tab 42 and the lower terminal plate 73 of the negative terminal 70. Further, the lower terminal plate 63 of the positive terminal 60 and the lower terminal plate 73 of the negative terminal 70 are connected to the upper terminal plate 62 of the positive terminal 60 and the upper terminal plate 72 of the negative terminal 70, respectively. A detailed configuration of the electrode terminals 60 and 70 will be described later.

Lower insulation members 51 and 52 are provided to insulate the terminal connection members 65 and 75 and the lead tabs 41 and 42 that are connected to the electrode assembly 10 from the case 20 and the cap plate 35. The lower insulation members 51 and 52 are disposed between the positive and negative lead tabs 41 and 42 and the cap plate 35, and are formed to enclose a periphery of the positive and negative lead tabs 41 and 42. Further, the lower insulation members 51 and 52 are formed to enclose a periphery of the positive and negative terminal connection members 65 and 75 that are formed in a lower part of the cap plate 35. By such a configuration, while the lead tabs 41 and 42 and the terminal connection members 65 and 75 are supported and a connection thereof is securely formed, the lead tabs 41 and 42 and the terminal connection members 65 and 75 are insulated from the case 20 and the cap plate 35.

Gaskets 53 and 54 are installed between the cap plate 35 and the positive and negative terminal connection members 65 and 75 that penetrate the cap plate 35 and seal the space between the positive and negative terminal connection members 65 and 75, and the cap plate 35, respectively. Further, the gaskets 53 and 54 include an insulation material and thus may electrically insulate the positive and negative terminal connection members 65 and 75 from the cap plate 35.

At the positive terminal 60 side, a connection plate 64 is installed between the lower terminal plate 63 and the cap plate 35. A through hole 64h is formed in the connection plate 64 and the positive terminal connection member 65 is connected to the lower terminal plate 63 by penetrating the through hole 64h. The positive terminal connection member 65 is preferably formed in a rivet shape to be coupled as a rivet to the lower terminal plate 63. Accordingly, the connection plate 64 is formed with material having excellent electrical conductivity such as aluminum and copper and closely contacts with the cap plate 35 by the configuration to electrically connect the positive terminal 60 and the cap plate 35.

As described above, the cap assembly 30 according to the present exemplary embodiment includes a deformable member 33 and a short circuit tab 34. The deformable member 33 is installed in a short circuit hole 33a that is formed in the cap plate 35 to be electrically connected to the cap plate 35, and the short circuit tab 34 is formed to cover the short circuit hole 33a to be electrically connected to the negative terminal 70. An upper insulation member 55 is installed between the short circuit tab 34 and the cap plate 35 to insulate therebetween.

The deformable member 33 is formed to bend toward the internal space of the case 20, and if the internal pressure of the rechargeable battery 100 arrives at a predetermined pressure by rising upon overcharging, the deformable member 33 is deformed in a bent formation to the outside from the internal space of the case 20 to contact the short circuit tab 34. Therefore, when the internal pressure rises and arrives at a predetermined pressure, the deformable member 33 and the short circuit tab 34 are connected and thus a short circuit occurs and an overcharge is thus solved, thereby preventing explosion and ignition of the rechargeable battery 100 due to the increase of internal pressure. The deformable member 33 is formed to have sufficient thickness to sustain a short circuit state even with regard to heat that is generated upon short-circuiting.

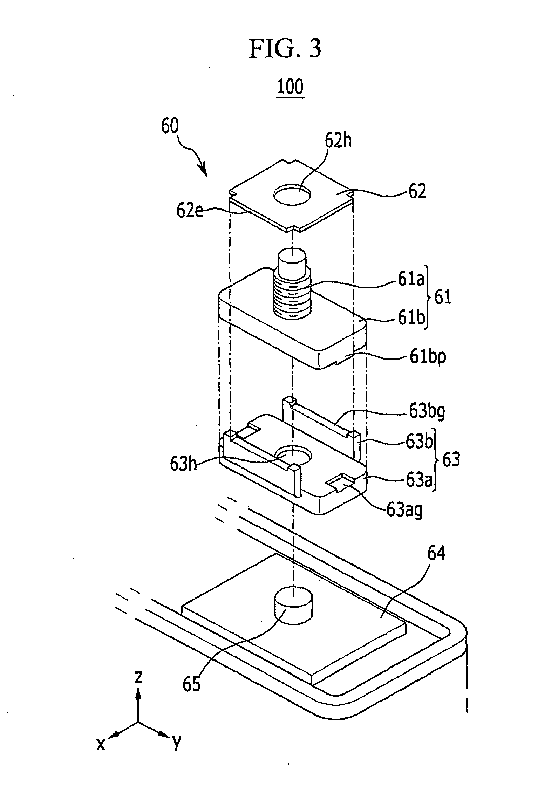

Hereinafter, a structure of an electrode terminal of a rechargeable battery according to a first exemplary embodiment of the present invention will be described in detail with reference to FIGS. 3 to 5.

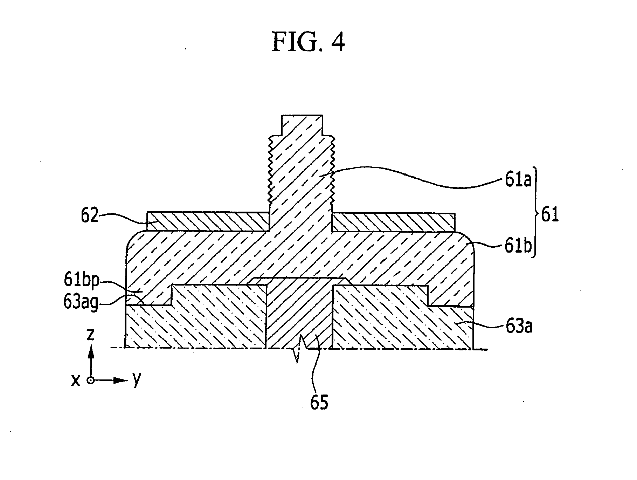

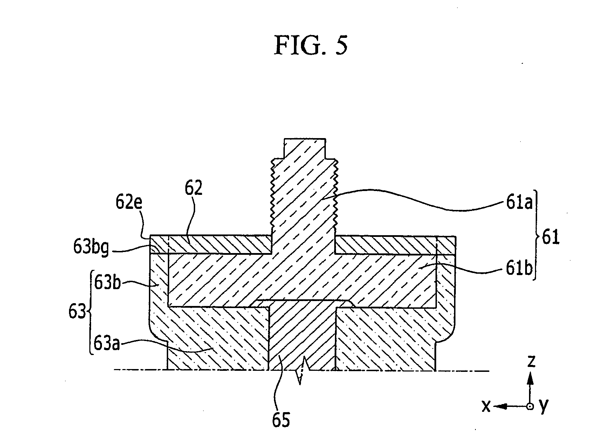

FIG. 3 is a partial exploded perspective view illustrating an electrode terminal of a rechargeable battery according to a first exemplary embodiment of the present invention, FIG. 4 is a cross-sectional view illustrating an electrode terminal of the rechargeable battery taken along line IV-IV of FIG. 1, and FIG. 5 is a cross-sectional view illustrating an electrode terminal of the rechargeable battery taken along line V-V of FIG. 1. FIGS. 3 to 5 illustrate only the positive terminal 60 according to the present exemplary embodiment, and the negative terminal 70 has a structure similar to that of the positive terminal 60, thus the positive terminal 60 will be described hereinafter, and portions of the negative terminal 70 that are different from the positive terminal 60 will be briefly described.

Referring to FIGS. 3 to 5, the positive terminal 60 of the rechargeable battery 100 according to the present exemplary embodiment includes an upper terminal plate 62, a lower terminal plate 63, a positive terminal connection member 65, and a positive terminal fastening member 61.

As described above, the positive terminal connection member 65 penetrates through holes that are formed in each of the cap plate 35 and the connection plate 64, protrudes to the outside of the cap assembly 30, and is coupled to the lower terminal plate 63, preferably as a rivet. The lower terminal plate 63 includes a pair of side walls 63b that are formed at both sides extending along the y-axis in Fig. 3, and the positive terminal fastening member 61 is housed in a space that is formed between the side walls 63b. Said space extends in the x-direction in Fig. 1, i.e. perpendicular to the direction of extension of the side walls 63b. The upper terminal plate 62 is coupled to the lower terminal plate 63 while covering the positive terminal fastening member 61 to fix the positive terminal fastening member 61.

The lower terminal plate 63 of the positive terminal 60 includes a base plate 63a in which a through hole 63h that has the positive terminal connection member 65 inserted therein is formed, and a pair of side walls 63b that are formed opposite to each other to be symmetrically arranged to the through hole 63h along a width direction, i.e. the x-axis direction in Fig. 3, of the cap plate 35. The side walls 63b extend in a length direction, the y-axis in Fig. 3. The base plate 63a is coupled by the rivet form of the positive terminal connection member 65 to the positive terminal connection member 65 to closely connect with the connection plate 64, and the spaced apart pair of side walls 63b form a space therebetween for housing the positive terminal fastening member 61. In other words, the space between the side walls 63b in a width direction is equal to the width of the positive terminal fastening member 61.

First groove portions 63ag are formed at both longitudinal sides of the base plate 63a where the side walls 63b are not formed, i.e. spaced apart in a length or y-direction, and thus protrusions 61 bp that are formed in the positive terminal fastening member 61, preferably at the sides of the positive terminal fastening member 61 protruding downwards in a z-direction, are inserted into the first groove portions 63ag. Thus, the first groove portions 63ag and the protrusions 61 bp are formed at corresponding locations with corresponding sizes to fit into each other. Further, a second groove portion 63bg is formed in the each side wall 63b, preferably the top of each side wall 63b has a second groove portion 63bg extending along the side wall 63b in the y-direction in Fig. 3. An edge portion 62e of the upper terminal plate 62 is formed such that it fits into the second groove portion 63bg. In other words, the edge 62e of the upper terminal plate 62 has a size matching the extension of the second groove portion 63bg in the top ends of the side walls 63b of the first terminal plate 63. In this way, by forming a first and second groove portions 63ag, 63bg to be coupled to the positive terminal fastening member 61 and the upper terminal plate 62 in the lower terminal plate 63, they can be easily assembled, and after they are assembled, rotation and movement of the positive terminal fastening member 61 and the upper terminal plate 62 are suppressed. In other words, the side walls 63b of the lower terminal plate 63 prevent movement of the positive terminal fastening member 61 in an x-direction, the first groove portions 63ag along with the protrusions 61 bp prevent movement the positive terminal fastening member 61 in an x- and y-direction and the provision of the positive terminal fastening member 61 sandwiched between the lower and the upper terminal plate 63, 62 prevents movement of the positive terminal fastening member 61 in a vertical or z-direction. Due to the formation of the second groove portions 63bg on the side walls 63b of the lower terminal plate 63 and the fitting of the edges 62e of the upper terminal plate 62 into the second groove portions 63bg, the upper terminal plate 62 is prevented from moving in an x- and a y-direction. The upper terminal plate 62 has the shape of a plate with cut-out corners. In other words, an edge 62e of the upper terminal plate 62 is a side end of the upper terminal plate 62 between two cut-out corners.

The position and size of groove portions 63ag, 63bg that are formed in the base plate 63a and the side walls 63b are not limited to the illustrated example, and can be variously changed.

The lower terminal plate 73 of the negative terminal 70 has a structure similar to the lower terminal plate 63 of the positive terminal 60. However, the short circuit tab 34 and the upper insulation member 55 rather than the connection plate 64 are installed between the lower terminal plate 73 and the cap plate 35, and through holes are formed in each of the short circuit tab 34 and the upper insulation member 55 and thus the negative terminal connection member 75 and the lower terminal plate 73 are coupled by the rivet form of the negative terminal connection member protruding 75 through the through holes.

The positive terminal fastening member 61 includes an insertion portion 61 b that is housed in the lower terminal plate 63 between the side walls of the lower terminal plate 63 and a fastening portion 61 a that protrudes from one side of the insertion portion 61 b. The insertion portion 61 b extends in a lateral plane while the fastening portion 61 a extends perpendicularly upward from the insertion portion 61 b. The insertion portion 61 b has the same width as a distance between a pair of side walls 63b of the lower terminal plate 63. Further, the insertion portion 61 b includes a protrusion 61 bp that is formed to correspond in size and location to the first groove portion 63ag that is formed in the base plate 63a of the lower terminal plate 63. Referring to FIG. 4, a protrusion 61 bp that is formed in the insertion portion 61 b is inserted into the first groove portion 63ag that is formed in the base plate 63a of the lower terminal plate 63 to prevent the positive terminal fastening member 61 from moving and rotating in x-axis and y-axis directions.

The fastening portion 61 a protrudes to an opposite side of the side of the terminal fastening member 61 contacting the lower terminal plate 63. When a plurality of rechargeable batteries 100 are formed in a battery module, neighboring rechargeable batteries are connected by a bus bar, and a thread is formed in the fastening portion 61 a of the positive terminal fastening member 61 and by fastening and fixing the bus bar to the bar fastening member, the electrode terminals 60 and 70 of neighboring rechargeable batteries are stably connected.

An upper part of the upper terminal plate 62 is formed as a flat plate, and in order to insert the fastening portion 61 a of the positive terminal fastening member 61, a through hole 62h is formed in a central part of the upper terminal plate 62. An edge portion 62e that protrudes to both sides (x-axis direction) of the upper terminal plate 62 to correspond in size and location to the second groove portion 63bg that is formed in the each side wall 63b of the lower terminal plate 63 is formed in the upper terminal plate 62. Referring to FIGS. 4 and 5, while the upper terminal plate 62 is disposed to cover the insertion portion 61 b of the positive terminal fastening member 61, the edge 62e that is formed at both surfaces of the upper terminal plate 62 is welded by a laser after being inserted into the second groove portion 63bg that is formed in the each side wall 63b of the lower terminal plate 63.

In this way, the upper terminal plate 62 and the lower terminal plate 63 are connected by welding a contact portion thereof and thus rotation and movement of the upper terminal plate 62 in x-axis and y-axis directions is suppressed. Accordingly, while the upper terminal plate 62 and the lower terminal plate 63 are electrically connected, the positive terminal fastening member 61 that is housed in the lower terminal plate 63 is stably fixed.

In other words, the lower surface of the insertion portion 61 b directly contacts an upper surface of the base plate and is supported thereon and the upper surface of the insertion portion directly contacts a lower surface of the second terminal plate. The insertion portion 61 b has the same width as a distance between the at least two side walls 63b of the first terminal plate 63. Moreover, it has the same height as the vertical space formed between the first and second terminal plates 63, 62.

In the present exemplary embodiment, the upper terminal plate 62 and the lower terminal plate 63 are formed with a material having high electrical conductivity such as aluminum and copper, and the positive terminal fastening member 61 is formed with a material having excellent strength such as stainless steel.

Because stainless steel has lower electrical conductivity than aluminum or copper, a current flowing to the electrode assembly 10, the lead tab 41, and the positive terminal connection member 65 does not flow through the positive terminal fastening member 61 and is transferred to the upper terminal plate 62 via the lower terminal plate 63 to be connected to an external constituent element.

However, because stainless steel has a relatively larger strength than aluminum or copper, even if a large torque is applied when connecting a bus bar using a bus bar fastening member such as a nut to the positive terminal fastening member 61 that is formed with stainless steel, the fastening portion is not deformed or damaged.

It is pointed out that it is not easy to directly connect the positive terminal fastening member 61 that is formed with stainless steel, etc., having excellent strength to the lower terminal plate 63, the connection plate 64, the short circuit tab 34, or the cap plate 35 that is formed with aluminum or copper through welding, etc. However, as described above, in the present exemplary embodiment, the positive terminal 60 includes the upper terminal plate 62 and the lower terminal plate 63, and by welding and securely connecting them, the positive terminal fastening member 61 can be fixed to the space in which they are formed.

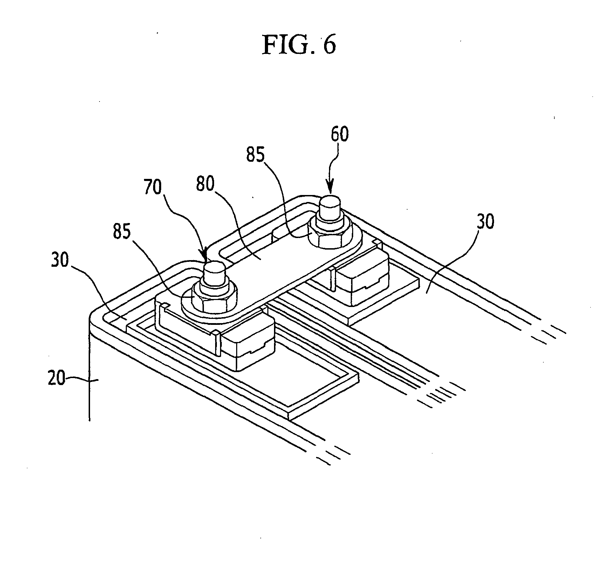

FIG. 6 is a partial enlarged view illustrating a fastening state between an electrode terminal and a bus bar of a rechargeable battery according to a first exemplary embodiment of the present invention.

Referring to FIG. 6, when forming a battery module by arranging rechargeable batteries in a line, a bus bar 80 is used for connecting electrode terminals 60 and 70 of neighboring rechargeable batteries. The present exemplary embodiment illustrates a case where the electrode terminals 60 and 70 of two neighboring rechargeable batteries are connected through the bus bar 80.

The bus bar 80 is formed in a bar shape, and has a pair of terminal holes into which fastening portions of terminal fastening members of the electrode terminals 60 and 70 are inserted. As shown in FIG. 6, after the positive terminal 60 and the negative terminal 70 of a pair of neighboring rechargeable batteries are inserted into terminal holes that are formed in the bus bar 80 of a bar shape, the positive terminal 60 and the negative terminal 70 are fastened through bus bar fastening members 85. Threads are formed in fastening portions of terminal fastening members of the electrode terminals 60 and 70 according to the present exemplary embodiment, and in order to fasten the bus bar 80 to the thread, the bus bar fastening member 85 is formed as a nut having a thread in an inside surface thereof.

As described above, the terminal fastening members of the electrode terminals 60 and 70 are made of a material having excellent strength such as stainless steel, and thus when fastening the bus bar fastening member 85 to the terminal fastening member, a large torque can be applied. For example, when the terminal fastening member is formed with aluminum, upon fastening the bus bar fastening member, if a large torque is applied, the terminal fastening member may be deformed or damaged due to the low strength of aluminum. However, when forming the terminal fastening member with stainless steel, a torque of more than about double can be applied than when forming the terminal fastening member with aluminum.

In this way, by forming the terminal fastening member of the electrode terminals 60 and 70 according to the present exemplary embodiment with a material having excellent strength such as stainless steel, when forming a battery module by connecting neighboring rechargeable batteries to the bus bar 80, a torque that is applied to the bus bar fastening member 85 can be large. Further, a terminal fastening member formed of a material different from that of a lower terminal plate and an upper terminal plate can be fixed through the lower terminal plate and the upper terminal plate, forming an electrical passage. Accordingly, even when using a battery module in an environment in which vibration and an impact frequently occur, such as in an electric vehicle or a hybrid vehicle, the connection between rechargeable batteries is suppressed from being released, and thus stability can be secured.

Further, as the upper surface of the upper terminal plate 62 that functions as an electrical passage is formed flat, when forming a battery module, the contact area between the bus bar 80 and the electrode terminals 60 and 70 can be increased. Accordingly, contact resistance between the bus bar 80 and the electrode terminals 60 and 70 is reduced, thereby reducing loss of electric energy.

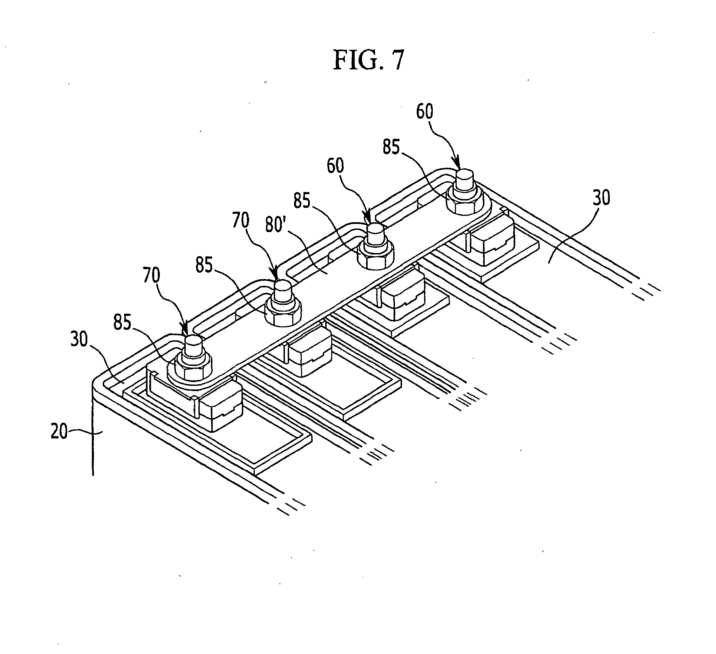

FIG. 7 is a partial enlarged view illustrating a fastening state between an electrode terminal and a bus bar of a rechargeable battery according to an exemplary variation of the present invention.

Referring to FIG. 7, in the present exemplary variation, when forming a battery module by arranging rechargeable batteries in a line, four rechargeable batteries are connected using one bus bar 80'. That is, two rechargeable batteries are disposed so that neighboring electrode terminals have the same polarity, for example positive terminals 60, and two rechargeable batteries are adjacently disposed so that positions of the above two rechargeable batteries and the electrode terminals are switched, and then four electrode terminals are connected by one bus bar.

A configuration for connecting four or more electrode terminals using one bus bar with a method similar to the present exemplary variation may be formed. When connecting rechargeable batteries with such a configuration, by connecting a plurality of rechargeable batteries by mixing a series connection and a parallel connection, a high capacity battery module can be formed.

Hereinafter, another exemplary embodiment of the present invention will be described. When describing this exemplary embodiment, the same configurations as of the first exemplary embodiment will be briefly described, or a description thereof will be omitted.

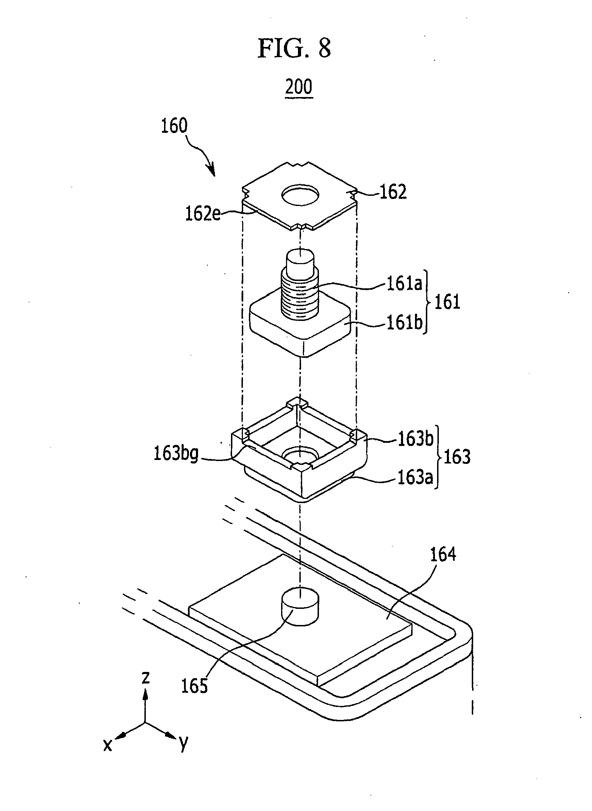

FIG. 8 is a partial exploded perspective view illustrating an electrode terminal of a rechargeable battery according to a second exemplary embodiment of the present invention. FIG. 8 illustrates only a positive terminal 160 according to the present exemplary embodiment, and a negative terminal has a structure similar to the positive terminal 160 and thus a description of the negative terminal will be omitted hereinafter.

In the present exemplary embodiment, other elements of a rechargeable battery 200 except for the electrode terminal are to the same as those of the first exemplary embodiment. That is, the rechargeable battery 200 of the present exemplary embodiment includes an electrode assembly including a positive electrode, a negative electrode, and a separator, a case that houses the electrode assembly, and a cap assembly including a cap plate that covers an opening that is formed at one side of the case. However, in the present exemplary embodiment, the structure of an electrode terminal is different from that of the first exemplary embodiment, and will be described hereinafter.

Referring to FIG. 8, the positive terminal 160 according to the present exemplary embodiment includes an upper terminal plate 162, a lower terminal plate 163, a positive terminal connection member 165, and a positive terminal fastening member 161.

The positive terminal connection member 165 penetrates through holes that are formed in each of a cap plate and a connection plate 164, protrudes to the outside of the cap assembly, and is coupled as a rivet to the lower terminal plate 163. The lower terminal plate 163 includes a base plate 163a and side walls 163b, and houses an insertion portion 161 b of the positive terminal fastening member 161 within a space that is enclosed by the side walls 163b.

The upper terminal plate 162 is coupled to the lower terminal plate 163 while covering the insertion portion 161b of the positive terminal fastening member 161. Specifically, groove portions 163bg are formed in the side walls 163b of the lower terminal plate 163, edge portions 162e of the upper terminal plate 162 are inserted into and coupled to the groove portions 163bg, and by performing laser welding along coupling portions, the upper terminal plate 162 and the lower terminal plate 163 are fixed. A fastening portion 161 a of the positive terminal fastening member 161 protrudes to an opposite side that contacts the lower terminal plate 163.

In this way, in the present exemplary embodiment, the side walls 163b are formed along the whole circumference of the base plate 163a and thus the positive terminal fastening member 161 is housed inside the space formed by the side walls 163b, and the upper terminal plate 162 is coupled and fixed to the lower terminal plate 163. Accordingly, the positive terminal fastening member 161 can be stably fixed without forming a separate groove portion in the base plate 163a of the lower terminal plate 163. In other words, in contrast to the embodiment of Fig. 3, the side walls 63b are formed on each of the four sides of the lower terminal plate 63, the side walls 63b being connected to each other forming a closed structure along the whole circumference of the base plate 163a.

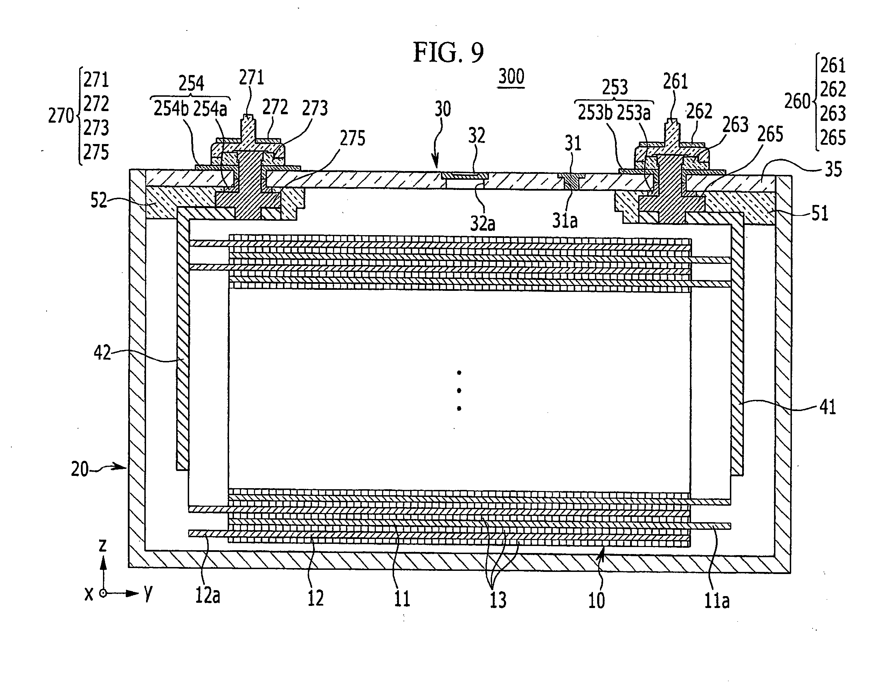

FIG. 9 is a cross-sectional view illustrating a rechargeable battery according to a third exemplary embodiment of the present invention.

Referring to FIG. 9, a rechargeable battery 300 according to the present exemplary embodiment has a similar structure to that of the rechargeable battery 100 according to the first exemplary embodiment. That is, the rechargeable battery 300 includes an electrode assembly 10 including a positive electrode 11, a negative electrode 12, and a separator 13, a case 20 that houses the electrode assembly 10, a cap assembly 30 including a cap plate 35 that covers an opening that is formed at one side of the case 20, and electrode terminals 260 and 270 that are formed to penetrate the cap plate 35. Further, the electrode terminals 260 and 270 include upper terminal plates 262 and 272, lower terminal plates 263 and 273, electrode terminal connection members 265 and 275, and electrode terminal fastening members 261 and 271, respectively.

In the cap assembly 30 of the present exemplary embodiment, a deformable member of the first exemplary embodiment is not formed. Accordingly, in a lower part of the lower terminal plate 263 of the positive terminal 260, a connection plate that is electrically connected to the cap plate 35 is not formed, and in a lower part of the lower terminal plate 273 of the negative terminal 270, a short circuit tab and an upper insulation member are not formed. In the present exemplary embodiment, gaskets 253 and 254 including an insulation material include upper gaskets 253a and 254a and lower gaskets 253b and 254b, respectively, thereby insulating the electrode terminal connection members 265 and 275 and the cap plate 35 and insulating the lower terminal plates 263 and 273 and the cap plate 35.

Accordingly, a fastening force between neighboring electrode terminals can be improved with a simple structure in which a deformable member is omitted according to a use and process of a rechargeable battery.

## Claims

1. A rechargeable battery comprising:
an electrode assembly (10),
a case (20) for housing the electrode assembly (10) therein,
a cap plate (35) covering an opening of the case (20),
an electrode terminal (60, 70) connected to the electrode assembly (10) comprising:
a first terminal plate (63) located on the cap plate (35) and electrically coupled to the electrode assembly (10),
a second terminal plate (62) electrically coupled to the first terminal plate (63) and having a through-hole (62h) formed therein, and
a terminal fastening member (61) comprising an insertion portion (61 b) fitted between the first and second terminal plates (62, 63) and a fastening portion (61 a) protruding through the through-hole (62h) in the second terminal plate (62), **characterized in that** the first terminal plate (63) comprises a base plate (63a) and at least two side walls (63b) extending from the base plate (63a).

2. Rechargeable battery of claim 1, wherein the terminal fastening member (61) is formed of a material being different from and having greater strength than the materials of the first and second terminal plates (63, 62).

3. Rechargeable battery of claim 1 or 2, wherein the terminal fastening member (61) is formed of a material having a lower electrical conductivity than the materials of the first and second terminal plates (63, 62).

4. Rechargeable battery of one of the previous claims, wherein the first and second terminal plates (63, 62) are formed of the same material, preferably of aluminium or copper, and the terminal fastening member (61) is formed of stainless steel.

5. Rechargeable battery of one of the previous claims, wherein the first and second terminal plates (63, 62) are separate plates being welded to each other.

6. Rechargeable battery of one of the previous claims, wherein the terminal fastening member is framed or bound by the first and second terminal plates (63, 62) at least in a vertical direction (z).

7. Rechargeable battery of claims 1, wherein the lower surface of the insertion portion (61 b) directly contacts an upper surface of the base plate (63a) and is supported thereon and the upper surface of the insertion portion (61 b) directly contacts a lower surface of the second terminal plate (62).

8. Rechargeable battery of one of claims 1 or 7, wherein the insertion portion (61 b) has the same width as a distance between the at least two side walls (63b) of the first terminal plate (63) and/or the same height as the vertical space formed between the first and second terminal plates (63, 62).

9. Rechargeable battery of one of claims 1, 7 or 8, wherein first groove portions (63ag) are formed on the base plate (63a) and first protrusions (61 bp) are formed on the terminal fastening member (61) adapted to fit into the first groove portions (63ag).

10. Rechargeable battery of one of claims 1 or 7 to 9, wherein a second groove portion (63bg) is formed on a side wall (63b) of the first terminal plate (63) adapted to receive an edge of the second terminal plate (62).

11. Rechargeable battery of claim 10, wherein an edge (62e) of the second terminal plate (62) is welded to the first terminal plate (63) at a location corresponding to the second groove portion (63bg).

12. Rechargeable battery of one of the previous claims, wherein a connection plate (64) is provided between the first terminal plate (63) and the cap plate (20), the connection plate (64) electrically coupling the cap plate (20) to the first terminal plate (63).

13. Rechargeable battery of claims 12, wherein the first terminal plate (63) and the connection plate (64) each comprise through-holes, for inserting a terminal connection member (65) therein, the terminal connection member (65) extending from an inside of the case (20).

14. Battery module comprising:
a plurality of rechargeable batteries according to one of claims 1 to 13, and
a bus bar (80) which electrically couples an electrode terminal (60, 70) of a first rechargeable battery with an electrode terminal (60, 70) of a second rechargeable battery,
and is arranged between a second terminal plate (62) of a respective terminal (60, 70) and a bus bar fastening member (85),
wherein the bus bar fastening member (85) is fixed to the terminal fastening member (61) of the respective terminal (60, 70).

## Patentansprüche

1. Wiederaufladbare Batterie, umfassend:
eine Elektrodenanordnung (10),
ein Gehäuse (20) zur Aufnahme der Elektrodenanordnung (10) in diesem,
eine Abdeckplatte (35) zum Abdecken einer Öffnung des Gehäuses (20),
eine mit der Elektrodenanordnung (10) verbundene Elektrodenklemme (60, 70), umfassend:
eine erste Klemmenplatte (63), die sich auf der Abdeckplatte (35) befindet und
elektrisch mit der Elektrodenanordnung (10) verbunden ist,
eine zweite Klemmenplatte (62), die elektrisch mit der ersten Klemmenplatte (63) verbunden ist und eine darin ausgebildete Durchgangsöffnung (62h) aufweist, und
ein Klemmenbefestigungselement (61) umfassend einen Einsetzabschnitt (61 b), der zwischen der ersten und zweiten Klemmenplatte (62, 63) montiert ist, sowie einen Befestigungsabschnitt (61 a), der durch die Durchgangsöffnung (62h) in der zweiten Klemmenplatte (62) vorsteht,
**dadurch gekennzeichnet, dass**
die erste Klemmenplatte (63) eine Grundplatte (63a) und mindestens zwei sich von der Grundplatte (63a) aus erstreckende Seitenwandungen (63b) umfasst.

2. Wiederaufladbare Batterie nach Anspruch 1, wobei das Klemmenbefestigungselement (61) aus einem Material besteht, das sich von den Materialien der ersten und zweiten Klemmenplatten (63, 62) unterscheidet und eine größere Stärke als diese aufweist.

3. Wiederaufladbare Batterie nach Anspruch 1 oder 2, wobei das Klemmenbefestigungselement (61) aus einem Material besteht, das eine niedrigere elektrische Leitfähigkeit als die Materialien der ersten und zweiten Klemmenplatten (63, 62) besitzt.

4. Wiederaufladbare Batterie nach einem der vorstehenden Ansprüche, wobei die ersten und zweiten Klemmenplatten (63, 62) aus dem selben Material bestehen, vorzugsweise Aluminium oder Kupfer, und das Klemmenbefestigungselement (61) aus Edelstahl besteht.

5. Wiederaufladbare Batterie nach einem der vorstehenden Ansprüche, wobei die ersten und zweiten Klemmenplatten (63, 62) separate, miteinander verschweißte Platten sind.

6. Wiederaufladbare Batterie nach einem der vorstehenden Ansprüche, wobei das Klemmenbefestigungselement mindestens in einer senkrechten Richtung (z) von den ersten und zweiten Klemmenplatten (63, 62) eingerahmt oder begrenzt ist.

7. Wiederaufladbare Batterie nach Anspruch 1, wobei die untere Fläche des Einsetzabschnitts (61 b) in direktem Kontakt mit einer oberen Fläche der Grundplatte (63a) steht und auf dieser getragen ist, und die obere Fläche des Einsetzabschnitts (61b) in direktem Kontakt mit einer unteren Fläche der zweiten Klemmenplatte (62) steht.

8. Wiederaufladbare Batterie nach einem der Ansprüche 1 oder 7, wobei der Einsetzabschnitt (61 b) dieselbe Breite aufweist wie ein Abstand zwischen den mindestens zwei Seitenwandungen (63b) der ersten Klemmenplatte (63) und/oder dieselbe Höhe wie der zwischen der ersten und der zweiten Klemmenplatte (63, 62) ausgebildete senkrechte Raum.

9. Wiederaufladbare Batterie nach einem der Ansprüche 1, 7 oder 8, wobei erste Aussparungsabschnitte (63ag) an der Grundplatte (63a) ausgebildet sind und erste Vorsprünge (61 bp) an dem Klemmenbefestigungselement (61) ausgebildet sind, die zum Einstecken in die ersten Aussparungsabschnitte (63ag) ausgestaltet sind.

10. Wiederaufladbare Batterie nach einem der Ansprüche 1 oder 7 bis 9, wobei ein zweiter Aussparungsabschnitt (63bg) an einer Seitenwandung (63b) der ersten Klemmenplatte (63) ausgebildet und ausgestaltet ist, einen Rand der zweiten Klemmenplatte (62) aufzunehmen.

11. Wiederaufladbare Batterie nach Anspruch 10, wobei ein Rand (62e) der zweiten Klemmenplatte (62) mit der ersten Klemmenplatte (63) an einer Stelle verschweißt ist, die dem zweiten Aussparungsabschnitt (63bg) entspricht.

12. Wiederaufladbare Batterie nach einem der vorstehenden Ansprüche, wobei eine Verbindungsplatte (64) zwischen der ersten Klemmenplatte (63) und der Abdeckplatte (20) vorgesehen ist, wobei die Verbindungsplatte (64) die Abdeckplatte (20) elektrisch mit der ersten Klemmenplatte (63) verbindet.

13. Wiederaufladbare Batterie nach Anspruch 12, wobei die erste Klemmenplatte (63) und die Verbindungsplatte (64) jeweils Durchgangsöffnungen zum Einsetzen eines Klemmenverbindungselements (65) darin umfassen, wobei sich das Klemmenverbindungselement (65) von einer Innenseite des Gehäuses (20) aus erstreckt.

14. Batteriemodul, umfassend:
eine Vielzahl von wiederaufladbaren Batterien nach einem der Ansprüche 1 bis 13,
und
eine Sammelschiene (80), welche eine Elektrodenklemme (60, 70) einer ersten wiederaufladbaren Batterie mit einer Elektrodenklemme (60, 70) einer zweiten wiederaufladbaren Batterie elektrisch verbindet und zwischen einer zweiten Klemmenplatte (62) einer jeweiligen Klemme (60, 70) und einem Sammelschienenbefestigungselement (85) angeordnet ist,
wobei das Sammelschienenbefestigungselement (85) an dem Klemmenbefestigungselement (61) der jeweiligen Klemme (60, 70) befestigt ist.

## Revendications

1. Batterie rechargeable comprenant :
un ensemble d'électrodes (10),
un boîtier (20) destiné à recevoir l'ensemble d'électrodes (10) en son sein,
une plaque de couverture (35) couvrant une ouverture du boîtier (20),
une borne d'électrode (60, 70) reliée à l'ensemble d'électrodes (10) comprenant :
une première plaque de borne (63) située sur la plaque de couverture (35) et
électriquement couplée à l'ensemble d'électrodes (10),
une deuxième plaque de borne (62) électriquement couplée à la première plaque de borne (63) et ayant un trou traversant (62h) formé en son sein, et
un élément de fixation de bornes (61) comprenant une partie d'insertion (61 b) ajustée entre les première et deuxième plaques de borne (62, 63) et une partie de fixation (61 a) faisant saillie à travers le trou traversant (62h) dans la deuxième plaque de borne (62),
**caractérisée en ce que** la première plaque de borne (63) comprend une plaque de base (63a) et au moins deux parois latérales (63b) s'étendant à partir de la plaque de base (63a).

2. Batterie rechargeable de la revendication 1, dans laquelle l'élément de fixation de bornes (61) est formé d'un matériau qui est différent des matériaux des première et deuxième plaques de borne (63, 62) et ayant une plus grande résistance que ceux-ci.

3. Batterie rechargeable de la revendication 1 ou 2, dans laquelle l'élément de fixation de bornes (61) est formé d'un matériau ayant une conductivité électrique inférieure à celle des matériaux des première et deuxième plaques de borne (63, 62).

4. Batterie rechargeable de l'une des revendications précédentes, dans laquelle les première et deuxième plaques de borne (63, 62) sont formées du même matériau, de préférence d'aluminium ou de cuivre, et l'élément de fixation de bornes (61) est formé d'acier inoxydable.

5. Batterie rechargeable de l'une des revendications précédentes, dans laquelle les première et deuxième plaques de borne (63, 62) sont des plaques séparées qui sont soudées l'une à l'autre.

6. Batterie rechargeable de l'une des revendications précédentes, dans laquelle l'élément de fixation de bornes est encadré par les, ou lié aux, première et deuxième plaques de borne (63, 62) au moins dans une direction verticale (z).

7. Batterie rechargeable de la revendication 1, dans laquelle la surface inférieure de la partie d'insertion (61 b) entre en contact direct avec une surface supérieure de la plaque de base (63a) et est supportée sur celle-ci, et la surface supérieure de la partie d'insertion (61 b) entre en contact direct avec une surface inférieure de la deuxième plaque de borne (62).

8. Batterie rechargeable de l'une des revendications 1 ou 7, dans laquelle la partie d'insertion (61 b) a une largeur égale à une distance entre lesdites au moins deux parois latérales (63b) de la première plaque de borne (63) et/ou une hauteur égale à l'espace vertical formé entre les première et deuxième plaques de borne (63, 62).

9. Batterie rechargeable de l'une des revendications 1, 7 ou 8, dans laquelle des premières parties de rainure (63ag) sont formées sur la plaque de base (63a) et des premières saillies (61 bp) sont formées sur l'élément de fixation de bornes (61) et adaptées pour s'ajuster dans les premières parties de rainure (63ag).

10. Batterie rechargeable de l'une des revendications 1 ou 7 à 9, dans laquelle une deuxième partie de rainure (63bg) est formée sur une paroi latérale (63b) de la première plaque de borne (63) et adaptée pour recevoir un bord de la deuxième plaque de borne (62).

11. Batterie rechargeable de la revendication 10, dans laquelle un bord (62e) de la deuxième plaque de borne (62) est soudé à la première plaque de borne (63) à un emplacement correspondant à la deuxième partie de rainure (63bg).

12. Batterie rechargeable de l'une des revendications précédentes, dans laquelle une plaque de connexion (64) est prévue entre la première plaque de borne (63) et la plaque de couverture (20), la plaque de connexion (64) couplant électriquement la plaque de couverture (20) à la première plaque de borne (63).

13. Batterie rechargeable de la revendication 12, dans laquelle chacune de la première plaque de borne (63) et de la plaque de connexion (64) comprend des trous traversants, pour y insérer un élément de connexion de bornes (65), l'élément de connexion de bornes (65) s'étendant à partir de l'intérieur du boîtier (20).

14. Module de batterie comprenant :
une pluralité de batteries rechargeables selon l'une des revendications 1 à 13,
et
une barre omnibus (80) qui couple électriquement une borne d'électrode (60, 70) d'une première batterie rechargeable à une borne d'électrode (60, 70) d'une deuxième batterie rechargeable, et qui est disposée entre une deuxième plaque de borne (62) d'une borne respective (60, 70) et un élément de fixation de barre omnibus (85),
l'élément de fixation de barre omnibus (85) étant fixé à l'élément de fixation de bornes (61) de la borne respective (60, 70).
